Europäisches Patentamt

European Patent Office

Office européen des brevets

(11) Publication number: **0 005 977**

**A2**

(12) **EUROPEAN PATENT APPLICATION**

(21) Application number: **79300957.2**

(22) Date of filing: **25.05.79**

(51) Int. Cl.²: **A 21 D 2/18**
**A 21 D 2/26**

(30) Priority: **30.05.78 GB 2416378**
**02.10.78 GB 3900878**

(43) Date of publication of application:
**12.12.79 Bulletin 79/25**

(84) Designated Contracting States:
**AT BE CH DE FR IT NL SE**

(71) Applicant: **SPEYWOOD LABORATORIES LTD.**
**Chancel House Bingham**
**Nottingham NG13 8DR(GB)**

(72) Inventor: **Heath, David**
**Granby House**
**Granby Nottinghamshire(GB)**

(72) Inventor: **Lees, Peter**
**The Cottages Main Street**
**Cropwell Butler Nottinghamshire(GB)**

(74) Representative: **Collier, Jeremy Austin Grey et al,**
**J.A.Kemp & Co. 14, South Square Gray's Inn**
**London WC1R 5EU(GB)**

(54) **Bread containing gum and its manufacture.**

(57) Bread providing a convenient way of consuming guar and other gums, e.g. in order to lower blood cholesterol and glucose levels, comprises flour, 5 to 50% of a non-absorbable non-toxic carbohydrate gum, and enough additional gluten to stabilise the structure of the bread. It may be made mixing the aforesaid ingredients dry, adding the water and any other ingredients to make a dough, proving the dough and then baking it in closed but not sealed containers until cooked. Preferably it is then removed from the containers and dried to form a crispbread.

EP 0 005 977 A2

Croydon Printing Company Ltd.

- 1 -

DESCRIPTION

"BREAD CONTAINING GUM AND ITS MANUFACTURE"

THIS INVENTION relates to bread and its manufacture.

It is known (see Jenkins et al, The Lancet, 1975, 1116 and 1977, 779) that certain edible but unabsorbable gel-forming carbohydrate substances such as guar gum and pectin, when administered to patients in substantial quantities, cause a significant lowering in the levels of cholesterol and glucose in the blood. It has, therefore, been proposed to administer such substances as medicaments for the control of carbohydrate metabolism and especially for diseases like hyperglycaemia, hyperlipoproteinaemia, and obesity.

Unfortunately, the desired effects are only obtained when substantial quantities, which may be, for example from 10 to 30 grams, of the substance are taken daily, and the consumption of such a large quantity of the substance presents considerable practical difficulties. Guar gum, which is the preferred substance, is normally available as a finely divided powder. While this powder may be sprinkled on foods and consumed in this way, this is inconvenient, and can be very inaccurate. To obtain the desired therapeutic effect, the patient must take the guar in large quantities regularly over a period of weeks or months. The sprinkling of large quantities of powdered gum onto foods causes an obnoxious gel to form, making this application totally unacceptable. Moreover, unless the gum is available in pre-weighed quantities, the amounts taken are likely to vary substantially and may be much less than the amount required.

Guar gum is soluble in water, and it is possible in principle to drink it as a solution. Nevertheless, this is very unsatisfactory in practice. Guar solutions which are at all concentrated are highly viscous and difficult and even nauseating to drink. Dilute solutions have to be consumed in considerable volume if they are to contain the necessary weight of guar.

Guar might also in principle be made up in the form of tablets, or in other compressed form. However, the dissolution of such tablets would be slow and might cause digestive difficulties because of the swelling of the gum as it dissolves.

It would also be possible to microencapsulate particles of gum guar. However experience has shown that not only is this expensive but also, and more important, microencapsulated guar gum dissolves unreliably so that the main objective of the microencapsulation, namely controlled delayed dissolution, is not achieved.

It has also been found that it is highly desirable for the guar gum to become rapidly thoroughly mixed with the stomach contents, since if this objective is achieved the gum then exerts its maximum beneficial effect. One way of helping to ensure such thorough mixing is by administering the gum in a form in which it has already been thoroughly mixed with a foodstuff.

There is therefore, a need for a readily consumable foodstuff in which guar gum and similar substances can be consumed easily and without revulsion and in which the gum can be present in sufficiently high concentration that the total amount of the foodstuff required to be consumed is conveniently small.

We have now devised a way of making bread containing a high proportion of a non-absorbable, non-toxic carbohydrate gum, which is appetising to the taste and easily consumed in adequate quantity to ensure the daily consumption of the required amount of the gum.

The present invention accordingly provides bread comprising flour, 5 to 50% of a non-absorbable, non-toxic carbohydrate gum which is guar gum, locust bean gum, pectin, or a water-soluble, non-toxic alkyl-cellulose, and enough additional gluten (beyond that contained in the flour) to stabilise the structure of the bread, the said percentage being based on the total dry weight of the flour, the gum and the additional gluten.

The flour used is preferably strong wheat flour of the kind used in bread-making. Other kinds of wheat flour and maize flour can also be used if desired, but it is necessary in that case to include larger amounts of added gluten in order to compensate for the smaller amount of gluten present in the flour itself. The additional gluten may be the commercially available material, for example, that containing 78% of protein; the function of the gluten is to stabilise the structure of the bread which would otherwise be rendered unstable because of the high proportion of gum which it contains. Obviously, it is a simple matter to determine for any particular combination of flour and gum how much of a particular gluten is required to stabilise the bread structure obtained after baking.

As already indicated, the preferred flour is strong wheat flour and the preferred gum is guar gum. When these materials are used, the bread preferably

- 4 -

comprises 20 to 50% of strong wheat flour, 5 to 45% of guar gum, and 20 to 50% of additional gluten, the percentages being based on the total dry weight of the flour, the gum and the additional gluten. [By "dry weight" is meant the weight of the flour, the gum and the additional gluten before additional water is added to make the dough. In fact, all these materials naturally contain a small proportion of water, but this normal water content is to be included in the total "dry weight".] Still more preferably, the bread comprises 25 to 40% of strong wheat flour, 15 to 45% of guar gum, and 30 to 48% of additional gluten, the percentages being calculated in the same way as before.

The novel bread of the present invention may have the same slightly damp texture as ordinary bread. Such bread has, however, a relatively short shelf life of five days or less, unless it is tinned, or otherwise preserved. Such a short shelf life is undesirable for a product of the kind under consideration, which should desirably remain usable for a period of up to a year. It is, therefore, preferred to make the bread of the present invention in the form of a crispbread. This is easily done by drying out the bread after manufacture until it is crisp in the manner described hereinafter. A crispbread in accordance with the present invention contains only about 5 to 15% by weight of water, usually 9 to 10%, and has an excellent appearance, taste and shelf life.

According to a feature of the present invention, the aforesaid novel bread is made by homogeneously mixing together the flour, the gum and the gluten in the dry state (as hereinbefore defined), then mixing them with water, and any other ingredients of the bread, especially yeast, salt and other conventional ingredients such as ascorbic acid, to form a dough, proving the dough, normally at 15 to 50°C, until it has expanded to the desired degree, and baking the expanded dough in closed but not sealed containers at 200 to 250°C until the outside of the bread has coloured adequately and the bread has become sufficiently stable to be cooled without collapsing. If, as is common practice, the bread is baked in tins, the lids of the tins should be sufficiently loose to permit steam to escape during the baking. Preferably the bread is then removed from the tins or other containers and dried while still hot to produce a crispbread.

Usually the proportion of water used in making the dough is rather higher than the 30 to 40% or so of water, by weight of the dough, used in ordinary bread making. For example, when the flour is strong wheat flour and the gum is guar gum, the dough is usually made with 50 to 65% by weight of water. It will be understood that the gum has a much greater water-absorbing capacity than the flour and gluten. Consequently, mixtures containing high proportions of gum require more water than those containing lower proportions. The drying of the bread after baking must be correspondingly prolonged to provide a crispbread of the appropriate low water content.

The product obtained after the baking still contains a substantial amount of water, and while it is possible to sell the bread in this form, it is preferred, as already explained, to convert it into a crispbread which then becomes the product sold. To achieve this, the freshly baked bread while still hot may be removed from the tins and then dried in a microwave-oven for 1 to 7 minutes until crisp. The microwave-oven heats the bread and causes the residual water content of the baked bread to be rapidly reduced. In this way, it is possible to achieve a final water content of 5 to 15% by weight without difficulty. Preferably, the dried bread contains 9 to 10% by weight of water. In this form, it is stable for up to a year provided it is kept dry.

For marketing, the dried bread is sliced, and then packed. It is desirable to slice the bread in such a manner that each slice contains a definite predetermined amount of the gum, for example, 1,1.5 or 2 grams. If this is done, the patient knows exactly how many of the slices he ought to take each day in order to consume the prescribed amount of the gum.

The process can be carried out discontinuously or continuously. Continuous manufacture is desirable from the economic point of view, and fits in well with modern methods of ordinary bread making, but batch manufacture is better suited to close monitoring of the composition of the manufactured bread, and makes it possible to control strictly the gum content of it. Since the product is used as part of a medical treatment, such control is desirable and may be prescribed by law.

A continuous baking process for producing bread in accordance with the present invention may be operated as follows. The flour, gluten and gum are first mixed dry until the mixture is thoroughly homogeneous.

About 10 to 30 minutes mixing is usually adequate. The water, yeast and ascorbic acid, are mixed separately, and the dry materials and the aqueous mixture are then fed simultaneously into a horizontal mixing tube in which they are mixed together continuously to form a dough. This dough is extruded from the mixing tube with a screw extruder, and cut into portions corresponding to the size of the loaves desired. These portions are then placed in pre-heated baking tins. The tins are closed and the dough is proved, for example for 40 minutes at 37°C. The tins are then placed in an oven where they are baked for about 45 to 65 minutes at about 230°C. This temperature is rather lower than the usual baking temperature as it is important not to allow the skin of the bread to set too quickly, which would restrict the size of the loaves obtained. The baking time is longer than usual because of the relatively high proportion of water contained in the dough. Baking is considered finished when the outside of the loaves has coloured, and the loaf itself has an adequate stability. The bread is baked in closed tins, since if open tins are used an irregularly shaped product is obtained, and the dough is liable to overflow. Moreover, an accurate dose of gum per slice depends on each slice of each loaf being the same size.

When, as is preferred, the bread obtained is to be converted into a crispbread, the baked loaves while still hot are removed from the tins and then placed in a microwave-oven for, for example, $4\frac{1}{2}$ minutes, to remove excess water. In this way, the water content of the bread may be reduced to 9 to 10%, which is that appropriate for a crispbread.

The crispbread obtained is then allowed to cool, sliced and packaged. As already explained, the size of the slices is usually controlled so that each slice contains a known weight of gum, e.g. 1, 1.5 or 2 grams.

If the bread is to be made by a batch process, the ingredients are mixed together in a high-speed mixer for 2 to 6 minutes to produce a homogeneous dough. This dough is divided into portions having a size corresponding to that desired for the loaves, and these portions may then be allowed to prove for about 2 to 10 minutes at about 27°C. The proved portions are moulded into shapes corresponding to the baking tins used, and placed in the tins which are then closed. The dough in the tins is allowed to prove a second time for about 35 to 40 minutes at 37°C. The dough is then baked in an oven for 45 to 70 minutes at about 230°C until cooked. The loaves obtained may be dried, cooled, sliced and packed in the same way as in the continuous process.

The following formulations may be used to produce bread in accordance with the present invention.

Example 1

Formulation to produce a crispbread containing 1 gram of guar gum per slice.

|  | Parts per 100 by weight |
|---|---|
| Strong wheat flour | 18.4 |
| Gluten (78%) | 20.9 |
| Guar gum | 7.0 |
| Yeast | 1.08 |
| Salt | 0.45 |
| Ascorbic acid | 0.0037 |
| Water | 52.13 |

The proportion of guar gum in this formulation is about 15% based on the combined dry weight of flour, gluten and gum.  Thus, a crispbread slice weighing about 6 g contains about 1 g of the gum.  A patient consuming such a crispbread is advised to eat e.g. about 25 slices per day to consume the requisite quantity of gum.

Example 2

A formulation to produce a crispbread containing about 1.5 g of guar gum per slice.

|  | Parts per 100 by weight |
| --- | --- |
| Strong wheat flour | 11.7 |
| Gluten 78% | 13.59 |
| Guar gum | 12.45 |
| Yeast | 0.8867 |
| Salt | 0.37 |
| Ascorbic acid | 0.0033 |
| Water | 61.0 |

In this formulation, the proportion of guar gum is about 33% based on the combined weight of flour, gluten and gum.  It produces a more bulky bread than the formulation of Example 1.  A slice weighing about 4.5 g contains about 1.5 g of the gum.  A patient to whom such a crispbread is prescribed may be advised to eat e.g. about 16 slices of the crispbread per day.

Example 3

Formulation to produce a crispbread containing 1 gram of guar gum per slice.

- 10 -

|                      | Parts per 100 by weight |
|----------------------|-------------------------|
| Strong wheat flour   | 16.73                   |
| Gluten (78%)         | 18.58                   |
| Guar gum             | 8.92                    |
| Yeast                | 1.01                    |
| Salt                 | 0.23                    |
| Ascorbic acid        | 0.002                   |
| Water                | 54.51                   |

The proportion of guar gum in this formulation is about 20% based on the combined dry weight of flour, gluten, and gum. Thus a crispbread slice weighing about 5 g contains about 1 g of the gum. A patient may thus be advised to eat about 25 slices per day to consume about 25 g per day of guar gum.

Example 4

Formulation to produce a crispbread containing about 1.5 g of guar gum per slice.

|                      | Parts per 100 by weight |
|----------------------|-------------------------|
| Strong wheat flour   | 14.75                   |
| Gluten (78%)         | 16.39                   |
| Guar gum             | 10.93                   |
| Yeast                | 0.89                    |
| Salt                 | 0.21                    |
| Ascorbic acid        | 0.002                   |
| Water                | 56.81                   |

In this formulation the proportion of guar gum is about 26% based on the combined dry weight of flour, gluten, and gum. It produces a denser bread than the formulation of Example 3. A slice weighing about 6.5 g contains about 1.5 g of the gum. Thus a patient may eat about 16 of such slices to consume about 24 g of gum per day.

0005977

- 11 -

CLAIMS

1.    Bread comprising flour, 5 to 50% of a non-absorbable, non-toxic carbohydrate gum which is guar gum, locust bean gum, pectin, or a water-soluble, non-toxic alkyl-cellulose and enough additional gluten to stabilise the structure of the bread, the said percentage being based on the total dry weight of the flour, the gum, and the additional gluten.

2.    Bread according to Claim 1 comprising 20 to 50% of strong wheat flour, 5 to 45% of guar gum, and 20 to 50% of additional gluten, the percentages being based on the total dry weight of the flour, the gum, and the additional gluten.

3.    Bread according to Claim 2 comprising 25 to 40% of strong wheat flour, 15 to 45% of guar gum, and 30 to 48% of additional gluten.

4.    Process for producing bread as claimed in Claim 1 which comprises mixing together in the dry state the flour, the gum and the additional gluten, then mixing them with water and any other ingredients of the bread to form a dough, proving the dough until it has expanded to the desired degree, and baking the expanded dough in closed but not sealed containers at 200 to 250°C until the outside of the bread has coloured adequately and the bread has become sufficiently stable to be cooled without collapsing.

5.    Process according to Claim 4 in which the flour, gum and gluten are as defined in Claim 2 or 3.

6.    Process according to Claim 5 in which the dough contains 50 to 65% by weight of water.

7.      Process according to any of Claims 4 to 6 in which the bread is removed while still hot from the containers and then dried in a microwave oven until crisp.

8.      Process according to Claim 7 in which the bread is dried to a final water content of 9 to 10% by weight.